**Europäisches Patentamt**

**European Patent Office**

**Office européen des brevets**

(19)

(11) Veröffentlichungsnummer : **0 313 944 B1**

(12) **EUROPÄISCHE PATENTSCHRIFT**

(45) Veröffentlichungstag der Patentschrift :
16.10.91 Patentblatt 91/42

(51) Int. Cl.⁵ : **G10K 11/16**

(21) Anmeldenummer : **88117178.9**

(22) Anmeldetag : **15.10.88**

(54) Verfahren zur Minderung des Überfluggeräusches von Flugzeugen mit einem von einem Kolbenmotor getriebenen Propeller.

(30) Priorität : **20.10.87 DE 3735421**

(43) Veröffentlichungstag der Anmeldung :
**03.05.89 Patentblatt 89/18**

(45) Bekanntmachung des Hinweises auf die
Patenterteilung :
**16.10.91 Patentblatt 91/42**

(84) Benannte Vertragsstaaten :
**CH FR GB IT LI**

(56) Entgegenhaltungen :
**DE-A- 2 009 105**
**FR-A- 2 367 660**

(73) Patentinhaber : **Deutsche Forschungsanstalt**
**für Luft- und Raumfahrt e.V.**
**Linder Höhe Postfach 90 60 58**
**W-5000 Köln 90 (DE)**

(72) Erfinder : **Kallergis, Michael Dipl.-Ing.**
**Donnerburgweg 43**
**W-3300 Braunschweig (DE)**

(74) Vertreter : **Gralfs, Harro, Dipl.-Ing.**
**Am Bürgerpark 8**
**W-3300 Braunschweig (DE)**

## Beschreibung

Die Erfindung bezieht sich auf ein Verfahren nach dem Oberbegriff des Patentanspruches 1 und eine Vorrichtung zur Durchführung des Verfahrens.

Als Antrieb von Luftfahrzeugen mit Reisegeschwindigkeiten unter etwa 300 km/h dominiert der Propellerantrieb. Bei diesen Luftfahrzeugen handelt es sich im militärischen Bereich insbesondere um Transportflugzeuge sowie propellergetriebene ferngesteuerte Flugkörper und im zivilen Bereich um Sport- und Geschäftsreiseflugzeuge. Die Geräuschabstrahlung dieser Flugzeuge im zivilen Bereich wird nicht zuletzt aufgrund der großen Anzahl von Flugbewegungen und der vielfach niedrigen Flughöhe von der Bevölkerung in der Nähe von Flughäfen als belästigend angesehen.

Die wesentlichen Geräusche werden bei kleineren Propellerflugzeugen der allgemeinen Luftfahrt vom Motorauspuff und vom Propeller abgestrahlt. Die Geräuschabstrahlung vom Motorauspuff wird normalerweise durch Schalldämpfung reduziert.

Zur Minderung der überwiegend auf dem Propellergeräusch basierenden Geräuschabstrahlung ist es bei einem Verfahren nach dem Oberbegriff des Patentanspruches 1 bekannt, daß das Propellerschallfeld durch Superposition der Schallfelder von Anti-Schallgebern n.-ter Ordnung, die gegenüber der Rotorachse feststehend angeordnet sind, antiphasig in Wellengeometrie und in spektraler Richtungsverteilung nachgebildet und dadurch ausgelöscht wird. Für die Nachbildung der Schallfelder werden dabei gesonderte Anti-Schallgeber verwendet, beispielsweise eine druckluftbetriebene Sirene, deren Rotor synchron zum Propeller läuft. Weiter ist es bekannt, als Anti-Schallgeber einen Teil der Flugzeugbeplankung als Membran eines elektrodynamischen Lautsprechers auszubilden. Derartige zusätzliche Anti-Schallgeber sind aufwendig und schwer zu realisieren (DE-OS 2009105).

Da die Geräuschabstrahlung des Propellers insbesondere von der Blattspitzen-Machzahl abhängig ist, ist es bekannt, die Geräuschentstehung durch die Verminderung der Blattspitzen-Machzahl zu verringern. Eine Verringerung der Blattspitzen-Machzahl ist zwangsläufig mit einer Einbuße an Schubkraft verbunden. Es sind daher zusätzliche Maßnahmen zu treffen, um diese Schubeinbuße auszugleichen. Im allgemeinen bedingen diese Maßnahmen Änderungen des Propellers und/oder die Anordnung eines Getriebes zwischen Motor und Propeller. Auch dieser Weg ist damit im allgemeinen aufwendig.

Aufgabe der Erfindung ist es, ein Verfahren und eine Vorrichtung zur Minderung des Überfluggeräusches auf der Basis dar Lärmminderung durch Interferenzauslöschung mit Anti-Schallquelle zu schaffen, die mit nur geringem Aufwand an vorhandenen Flugzeugen realisiert werden können bzw. beineuen Flugzeugen ohne zusätzliche Komponenten anwendbar sind.

Diese Aufgabe wird ausgehend von dem Verfahren nach dem Oberbegriff des Patentanspruches 1 gemäß der Erfindung gelöst durch die im kennzeichnenden Teil des Anspruches 1 herausgestellten Merkmale.

Zweckmäßige Ausgestaltungen des Verfahrens und eine Vorrichtung zur Durchführung des Verfahrens sind Gegenstand der Unteransprüche.

Mit dem erfindungsgemäßen Verfahren läßt sich auch bei vorhandenen Flugzeugen ohne wesentlichen Aufwand für eine Umrüstung eine Minderung des A-bewerteten wie auch des linearen Geräuschpegels erreichen, die zu einer merklichen Entlastung der Umwelt führt.

Aus dem Dokument D1 (FR-A-2367660) ist an sich schon bekannt, einander ähnliche Rückstoßtriebwerke räumlich derart anzuordnen, das es zu einer zumindest teilweisen Auslöschung des Lärmschalls in bestimmden Richtungen kommt.

Die Erfindung ist in der Zeichnung beispielsweise veranschaulicht und im Nachstehenden im einzelnen anhand der Zeichnung beschrieben.

Fig. 1    zeigt den Druck-Zeitverlauf des Propellersignals eines Drei-Blatt-Propellers ;

Fig. 2    zeigt die A-Pegelbewertung von Propeller-Geräusch-Spektren ;

Fig. 3    zeigt den Druck-Zeitverlauf der Motorsignale eines 6-Zylinder-Motors ;

Fig. 4    zeigt schematisch die Geräuschmessung beim Überflug und den Zeitverlauf von A-bewerteten Pegeln ;

Fig. 5    zeigt die Phasenzurodnung von Motor- und Propellersignal zur Minderung der abgestrahlten Signalamplitude bei einer Kombination eines 6-Zylinder-Viertakt-Motors mit einem Drei-Blatt-Propeller ;

Fig. 6    zeigt in einer Tabelle verschiedene Verhältnisse von Propellerblatt-Drucksignalen und Motor-Zylinder-Drucksignalen.

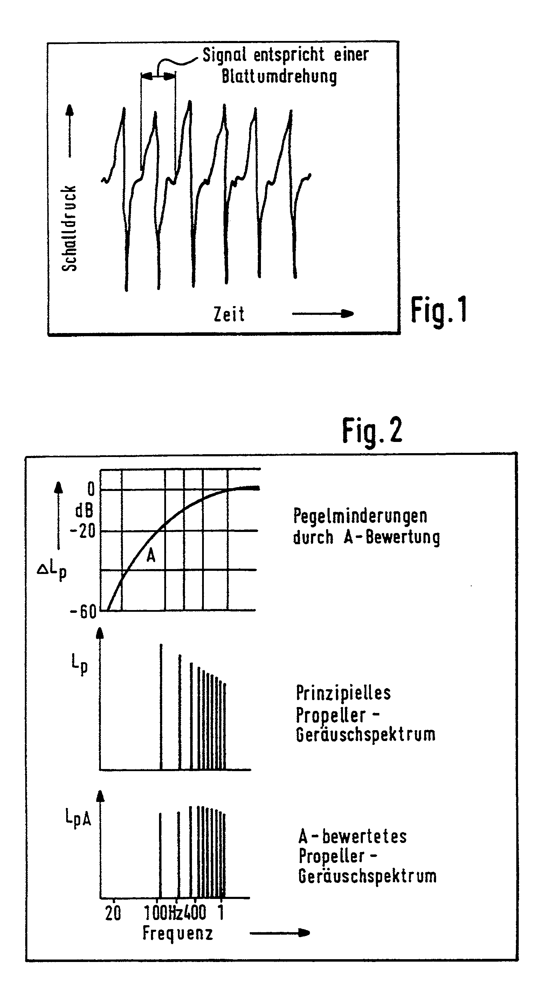

Die wesentlichen Geräusch- oder Lärmquellen bei kleineren Propellerflugzeugen der allgemeinen Luftfahrt sind der Propeller und der Motorauspuff. Wie in Fig. 1 dargestellt, besteht das Propellergeräusch im Zeitverlauf aus einer Folge von Signalen, die positive und negative Anteile besitzen, wobei jedem Blatt bei einer Propel-

EP 0 313 944 B1

lerdrehung ein Signal entspricht. Die positiven Anteile, also die Anteile des Geräusches auf der Druckseite, sind, wie in Fig. 1 ersichtlich, etwa sägezahnförmig. Auf der Unterdruckseite bildet sich dagegen bei den üblichen Drehzahlen der Propeller eine relativ schmale Spitze aus.

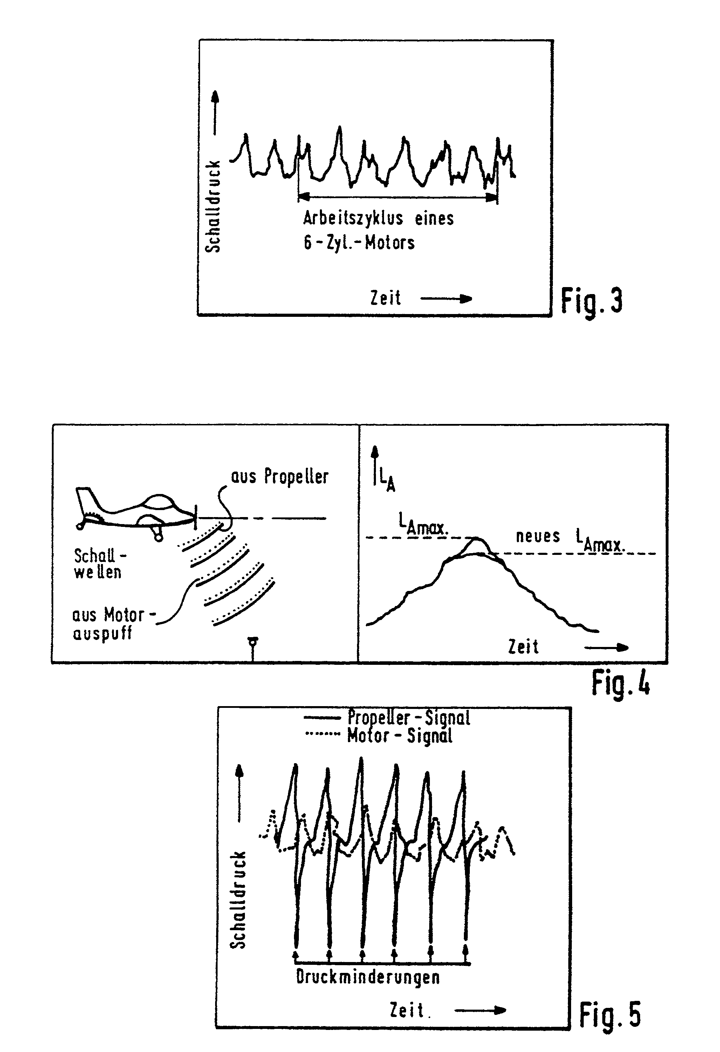

In Fig. 1 und den nachstehend zu beschreibenden Fig. 3 und 5 sind in den Meßdiagrammen keine Nullinien eingetragen. Der unbewertete Schalldruckpegel des Propellers ist mit Lp, der bewertete mit $L_{PA}$ bezeichnet. Der bewertete Gesamtschalldruckpegel ist $L_A$ (Fig. 4).

Die in Fig. 2 dargestellte schmalbandige Analyse von Signalfolgen zeigt, daß diese Spitzen ein Geräuschspektrum mit höherfrequenten Anteilen liefern, aus denen wiederum im wesentlichen der A-bewertete Pegel gebildet wird. Je schmaler die Unterdruckspitzen sind, desto höher fällt der für die Zulassung von Propellerflugzeugen maßgebliche A-bewertete Pegel aus — gleiche Ausgangsamplituden vorausgesetzt.

Das Motorgeräusch besteht ebenfalls aus Signalfolgen, wobei jedem Arbeitszyklus eines Kolbens ein Signal entspricht. Wie die Propellersignale bestehen die einzelnen Motorsignale aus positiven und negativen Anteilen, wie aus dem in Fig. 3 dargestellten Druck-Zeitverlauf des Motorsignals eines 6-Zylinder-Viertakt-Motors hervorgeht. Wie aus diesem Diagramm ersichtlich, hat jedes Motordrucksignal eine eigene Charakteristik, die aus Unterschieden der Zylinderauslässe und der Drucksignalausbildung im Auspuffsystem resultieren.

In der Praxis breiten sich die Signalfolgen von Motor und Propeller in Form von zufällig geordneten Schallwellen aus. Diese Schallwellen werden bei einer Geräuschmessung im Überflug von einem am Boden aufgestellten Mikrofon aufgenommen. Der A-bewertete Pegel einer solchen Aufnahme ist in seinem Zeitverlauf in Fig. 4 rechts dargestellt. Er erreicht dabei ein $L_{Amax}$.

Gemäß der Erfindung wird der Propeller nun derart auf der Antriebswelle angeordnet, daß Propellerschalldrücke antiphasig auf Motorschalldrücke fallen, so daß die Propellerschalldrücke durch Interferenz geschwächt werden, wodurch der vom Flugzeug abgestrahlte Gesamtschall vermindert wird. Vorzugsweise wird der Propeller so angeordnet, daß positive Anteile des Motorschalldruckes auf negative Anteile des Propellerschalldruckes fallen. Auf diese Weise kommt es zu einer Überlagerung der Propellersignale mit den Motorsignalen, wie sie in Fig. 5 dargestellt ist. Bei dieser Anordnung mindern sich dabei die negativen Anteile des Propellerschalldruckes um jeweils den Anteil des positiven Anteils des damit in Antiphase liegenden Motorschalldruckes, so daß es insgesamt zu einer Geräuschminderung, insbesondere einer Minderung des A-bewerteten Pegels kommt, der in der Größenordnung von einigen dB liegen kann.

Der der Geräuschminderung zugrundeliegende Effekt tritt nicht symmetrisch zur Flugzeugachse auf. Er läßt sich jedoch dadurch in die gewünschte Richtung — hier auf die bewohnten Gebiete unterhalb des Flugzeuges — steuern, daß der Propeller so auf der Antriebswelle angeordnet wird, daß die oben beschriebene Überlagerung der positiven Anteile des Motorschalldruckes und der negativen Anteile des Propellerschalldruckes hinsichtlich der nach unten gerichteten Schallwellen auftritt. Dabei kann die Geräuschminderung noch dadurch verbessert werden, daß der Motorschalldruck erhöht wird, z.B. dadurch, daß der Motor mit einer verminderten Schalldämpfung betrieben wird. Da eine verminderte Schalldämpfung des Motors auf dem Boden wohl nicht tolerierbar ist, kann daran gedacht werden, den Motor mit einer veränderbaren, ggf. regelbaren Schalldämpfung auszurüsten. Hierzu könnte im einfachsten Fall eine Öffnung in der Wandung der Auspuffleitung vor dem Dämpfer vorgesehen werden, die durch eine Klappe geöffnet oder geschlossen werden kann. Diese Öffnung mit der Klappe kann dabei so angeordnet sein, daß der Schalldruck in der Richtung abgestrahlt wird, in der das Optimum der Schalldrucküberlagerung und damit der Geräuschminderung anzustreben ist. Auch ein steuerbarer Bypass zum Dämpfer kann vorgesehen werden.

Im Vorstehenden ist davon ausgegangen, daß auf jedes Propellerblattdrucksignal ein Zylinderdrucksignal fällt. Dies ist beispielsweise der Fall bei einem 4-Zylinder-Viertakt-Motor mit einem Zwei-Blatt-Propeller, aber auch bei einem 4-Zylinder-Zweitakt-Motor mit einem Vier-Blatt-Propeller. Bei einem 6-Zylinder-Viertakt-Motor mit einem Zwei-Blatt-Propeller würde dagegen nur jedes zweite Propellerblattdrucksignal auf ein Motorzylinderdrucksignal fallen. Auch hier würde es noch zu einer Geräuschminderung kommen. Entsprechendes gilt für Antriebe, bei denen zwischen der Motor-welle und dem Propeller ein Untersetzungsgetriebe vorgesehen ist. Generell müssen die Zahl der Motorzündungen pro Umdrehung der Propellerwelle und die Zahl der Propellerblätter in einem ganzzahligen Verhaltnis zueinander stehen. Vorzugsweise ist ein Verhältnis 1 anzustreben, bei dem die maximale Geräuschminderung erreicht wird.

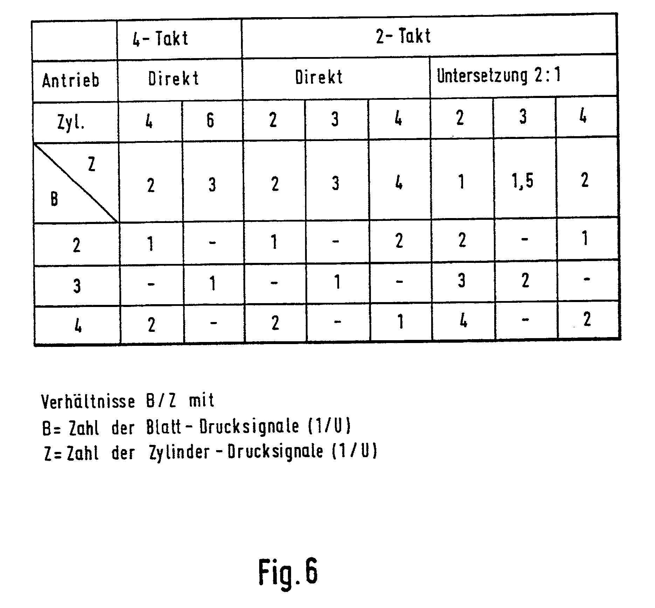

In Fig. 6 sind die Verhältnisse der Anzahl der Propellerblattdrucksignale zur Anzahl der Motorzylinderdrucksignale für verschiedene mögliche Motor-Propeller-Kombinationen mit und ohne Getriebe wiedergegeben. Eine Geräuschminderung für jedes Propellerblattdrucksignal tritt auf, wo die Verhältniszahl B/Z gleich 1 ist. Höhere Zahlen bedeuten ein entsprechend schlechteres Ergebnis.

Wenn zur aktiven Dämpfung jedes Blattdrucksignales ein Zylinderdrucksignal bei entsprechender Phase bereitgestellt werden kann, dann ist B/Z = 1 ein optimales Ergebnis. Bei Dämpfung der Hälfte bzw. eines Drittels der Blattdrucksignale ist die Kennzahl B/Z = 2 bzw. 3 ein mittleres Ergebnis. Die Kennzahl B/Z = 4 liegt vor, wenn zur Dämpfung von vier Blattdrucksignalen nur ein Zylinderdrucksignal phasengerecht, d. h. antiphasig

3

zur Verfügung steht.

Bei Ultra-Leichtflugzeugen ist die Verminderung des Geräusches ein besonderes Problem. Ultra-Leichtflugzeuge arbeiten normalerweise mit einem Untersetzungsgetriebe, das vielfach abhängig von Zufälligkeiten gewählt ist. Durch Wahl eines Untersetzungsgetriebes mit ganzzahligem Untersetzungsverhältnis lassen sich, wie aus Fig. 6 ersichtlich, bei den dort angegebenen Kombinationen Geräuschminderungen in der erfindungsgemäßen Weise erreichen. Bei Ultra-Leichtflugzeugen wird der Propeller vielfach über Keilriemen mit Untersetzung angetrieben. Der hierbei unvermeidliche Schlupf muß selbstverständlich zur Erreichung der erfindungsgemäßen Arbeitsweise vermieden werden. Es müssen daher für das Untersetzungsgetriebe mit Riemenübertragung schlupfvermeidende Zahnriemen oder dergleichen eingesetzt werden. Bei Untersetzungsgetrieben mit Zahnriemen läßt sich auch in einfacher Weise die Phasenlage der Schalldrücke des Motors und des Propellers einstellen.

Das Verfahren ist sowohl für Festpropeller als auch für Verstellpropeller geeignet. Wie gesagt können die Propeller dabei direkt auf der Motorwelle angeordnet sein oder über ein Untersetzungsgetriebe.

Für die Durchführung des Verfahrens ist lediglich notwendig, die Flansche des Motors und des Propellers derart verstellbar zu machen bzw. derart mit Bohrungen zu versehen, daß gezielt die Phasen-Zuordnung von Motorüberdruck und Propellerunterdruck erreicht wird, die zu der Verminderung der Geräuschamplitude führt.

Eine Geräuschminderung läßt sich ohne wesentlichen Aufwand bei vorhandenen Flugzeugen erreichen unter Verwendung einer Adapterscheibe, mit der es möglich ist, den Propellerflansch relativ zum Motorflansch derart zu verdrehen, daß die negativen Druckanteile des Propellersignals und die positiven Druckanteile des Motorsignals in der Phase jeweils aufeinander fallen.

**Patentansprüche**

1. Verfahren zur Minderung des Überfluggeräusches von Flugzeugen mit von einem Kolbenmotor angetriebenen Propeller, bei dem von einer Schallquelle am Flugzeug, die in einem Abstand vom Propeller angeordnet ist, positive Schalldrücke abgegeben werden, die auf negative Anteile des Schalldruckes des Propellers fallen, dadurch gekennzeichnet, daß der Propeller derart auf der Antriebswelle angeordnet wird, daß Propellerschalldrücke antiphasig auf Motorschalldrücke fallen, so daß die Propellerschalldrücke durch Interferenz geschwächt und so der vom Flugzeug abgestrahlte Gesamtschall vermindert wird.

2. Verfahren nach Anspruch 1, dadurch gekennzeichnet, daß positive Anteile des Motorschalldruckes auf negative Anteile des Propellerschalldruckes fallen.

3. Verfahren nach Anspruch 1 oder 2, gekennzeichnet durch die Verwendung einer Motor-Propeller-Kombination, bei der die Zahl der Motorzündungen pro Umdrehung der Propellerwelle dividiert durch die Zahl der Propellerblätter ganzzahlig, vorzugsweise gleich 1 ist.

4. Verfahren nach Anspruch 1, 2 oder 3, dadurch gekennzeichnet, daß der Motorschalldruck durch Änderung der Schalldämpfung variabel ist.

5. Verfahren nach einem der vorhergehenden Ansprüche, dadurch gekennzeichnet, daß die Richtcharakteristik des Motorschalldruckes veränderbar ist.

**Claims**

1. Method for reducing the overflying noise of airplanes having a propeller driven by a piston engine, in which, from a sound source on the airplane, which is arranged at a distance from the propeller, there are emitted positive sound pressures, which fall on negative components of the sound pressure of the propeller, characterized in that the propeller is arranged on the drive shaft in such a way that propeller sound pressures fall on engine sound pressures in antiphase, so that the propeller sound pressures are attenuated by interference, and so the total sound emitted by the airplane is reduced.

2. Method according to claim 1, characterized in that positive components of the engine sound pressure fall on negative components of the propeller sound pressure.

3. Method according to claim 1 or 2, characterized by the use of an engine/propeller combination, in which the number of engine ignitions per revolution of the propeller shaft divided by the number of the propeller blades is an integer, preferably being equal to 1.

4. Method according to claim 1, 2 or 3, characterized in that the engine sound pressure can be varied by changing the sound insulation.

5. Method according to one of the preceding claims, characterized in that the directional characteristic of the engine sound pressure is variable.

## Revendications

1. Procédé pour atténuer le bruit de survol d'avions munis d'une hélice entraînée par un moteur à piston, procédé dans lequel des pressions sonores positives générées par une source sonore placée à distance de l'hélice coincident avec les parties négatives de la pression sonore de l'hélice, caractérisé en ce que l'hélice est positionnée sur l'arbre d'entraînement de telle manière que les pressions sonores de celle-ci arrivent en antiphase avec les pressions sonores du moteur, si bien que la pression sonore de l'hélice est affaiblie par interférence et qu'ainsi l'émission totale du bruit de l'avion est atténuée.

2. Procédé selon la revendication 1, caractérisé en ce que des parties positives de la pression sonore du moteur coincident avec les parties négatives de la pression sonore de l'hélice.

3. Procédé selon la revendication 1 ou 2, caractérisé en ce qu'en utilisant une combinaison moteur-hélice, dans laquelle le nombre d'allumages du moteur par tour d'arbre d'hélice divisé par le nombre de pales d'hélice donne un nombre entier, ce dernier est de préférence égal à 1.

4. Procédé selon la revendication 1, 2 ou 3, caractérisé en ce que la pression sonore du moteur est variable par modification de l'amortissement du bruit.

5. Procédé selon l'une des revendications précédentes, caractérisé en ce que la directivité de la pression sonore du moteur est modifiable.

Fig.1

Signal entspricht einer Blattumdrehung

Schalldruck

Zeit

Fig.2

dB
0
-20
-60
$\Delta L_p$
A

Pegelminderungen durch A-Bewertung

$L_p$

Prinzipielles Propeller-Geräuschspektrum

$L_{pA}$

A-bewertetes Propeller-Geräuschspektrum

20    100Hz 400    1
Frequenz

Schalldruck

Arbeitszyklus eines
6 - Zyl.- Motors

Zeit ⟶

**Fig. 3**

aus Propeller

Schallwellen

aus Motorauspuff

$L_A$

$L_{Amax.}$     neues $L_{Amax.}$

Zeit ⟶

**Fig. 4**

―― Propeller – Signal
······ Motor – Signal

Schalldruck

Druckminderungen

Zeit ⟶

**Fig. 5**

| Antrieb | 4- Takt | | 2- Takt | | | | | |
|---|---|---|---|---|---|---|---|---|
| | Direkt | | Direkt | | | Untersetzung 2 : 1 | | |
| Zyl. | 4 | 6 | 2 | 3 | 4 | 2 | 3 | 4 |
| Z<br>B | 2 | 3 | 2 | 3 | 4 | 1 | 1,5 | 2 |
| 2 | 1 | - | 1 | - | 2 | 2 | - | 1 |
| 3 | - | 1 | - | 1 | - | 3 | 2 | - |
| 4 | 2 | - | 2 | - | 1 | 4 | - | 2 |

Verhältnisse B/Z mit

B= Zahl der Blatt - Drucksignale (1/U)

Z= Zahl der Zylinder - Drucksignale (1/U)

# Fig. 6